# EUROPEAN PATENT APPLICATION

(11) **EP 4 822 292 A1**
(43) Date of publication of application: **14.10.2026**
(21) Application number: 25913463.3
(22) Date of filing: 09.12.2025
(51) Int. Cl.: G01B 21/08, G01B 21/04, G01B 5/00, H01M 10/42

(54) **SECONDARY BATTERY ELECTRODE THICKNESS MEASURING DEVICE AND SECONDARY BATTERY ELECTRODE THICKNESS MEASURING METHOD USING SAME**

(30) Priority: 23.12.2024 KR 20240194385
(71) Applicant: LG Energy Solution, Ltd., Seoul 07335 (KR)
(72) Inventor: KIM, Jae Hyun, Daejeon 34122 (KR); KANG, Ji Hyeon, Daejeon 34122 (KR)
(74) Representative: Goddar, Heinz J.
(86) International application number: PCT/KR2025/021164
(87) International publication number: WO 2026/142073

(57) **Abstract**

The present disclosure provides a secondary battery electrode thickness measuring device comprising a fixed side base member; a lower base member coupled to the side base member; a plurality of electrode transfer rollers supported by the side base member, supporting an electrode, and transferring the electrode in one direction; a sensor part measuring a thickness of an electrode positioned in a space between two electrode transfer rollers among the plurality of electrode transfer rollers; a moving part moving the sensor part; and a calibration part zero-point calibrating the sensor part.

## Description

### [Technical Field]

The present disclosure relates to a secondary battery electrode thickness measuring device and a secondary battery electrode thickness measuring method using the same, and more particularly, to a secondary battery electrode thickness measuring device capable of measuring a thickness of an electrode and reducing measurement errors by performing zero-point calibration of a sensor part, and a secondary battery electrode thickness measuring method using the same. This application claims the benefit of priority from Korean Patent Application No. 10-2024-0194385, filed on December 23, 2024, the entire contents disclosed therein are incorporated by reference into this disclosure.

### [Background]

Unlike primary batteries, secondary batteries can be charged and discharged multiple times. Secondary batteries are widely used as energy sources for various wireless devices such as handsets, laptops, wireless vacuum cleaners, etc. Recently, due to energy density improvements and economies of scale, the manufacturing cost per unit capacity of secondary batteries has dramatically decreased, and as the cruising distance of BEVs (battery electric vehicles) has increased to a level equivalent to fuel vehicles, the primary applications of secondary batteries are shifting from mobile devices to mobility.

Manufacturing of secondary batteries comprises an electrode process including mixing, coating, roll pressing, slitting, and notching processes, an assembly process of mounting an electrode assembly in a case, and an activation process of electrically activating and stabilizing battery cells. After the activation process, the battery cells may be stacked to form a cell stack. The cell stack may be mounted in a housing together with a module frame, or may be directly mounted in a housing without a module frame.

Unit cells of secondary batteries are divided into cylindrical, prismatic, and pouch types according to the type of case. In the case of cylindrical batteries, a positive electrode and a negative electrode, which are electrodes coated with active materials, are conveyed in a plate shape, a separator, which is an insulator, is interposed between the positive electrode and the negative electrode, which are electrodes coated with active materials, and a winding process is performed to wind them to form a jelly-roll-type electrode assembly, and the jelly-roll-type electrode assembly is inserted into a battery can to constitute a battery.

In the winding process, there is a problem in that thickness measurement is impossible with conventional secondary battery electrode thickness measuring devices because space between the positive electrode, the negative electrode, and the separator is narrow, and there is a problem in that errors in secondary battery electrode thickness measurement increase because the zero point of a thickness measurement sensor is changed due to vibration of the winding process.

Therefore, in order to solve the above problems, there is a demand for technology related to a secondary battery electrode thickness measuring device that can be used in a winding process and is capable of zero-point adjustment during the winding process, and a secondary battery electrode thickness measuring method using the same.

### [Summary]

### [Technical Problem]

The first technical problem to be achieved by the present disclosure is to provide a secondary battery electrode thickness measuring device that can be used in a winding process and is capable of zero-point adjustment during the winding process.

The second technical problem to be achieved by the present disclosure is to provide a secondary battery electrode thickness measuring method that can be used in a winding process and is capable of zero-point adjustment during the winding process.

### [Technical Solution]

In order to achieve the first technical problem, the present disclosure provides a secondary battery electrode thickness measuring device comprising a fixed side base member; a lower base member coupled to the side base member; a plurality of electrode transfer rollers supported by the side base member, supporting an electrode, and transferring the electrode in one direction; a sensor part measuring a thickness of an electrode positioned in a space between two electrode transfer rollers among the plurality of electrode transfer rollers; a moving part capable of moving the sensor part; and a calibration part zero-point calibrating the sensor part.

In some embodiments, the sensor part may comprise an upper sensor measuring an upper portion of the electrode; and a lower sensor disposed at a position corresponding to the upper sensor and measuring a lower portion of the electrode.

In some embodiments, when transfer of the electrode by the plurality of electrode transfer rollers is stopped, the moving part may move the sensor part to the calibration part.

In some embodiments, when transfer of the electrode by the plurality of electrode transfer rollers is resumed, the moving part may return the moved sensor part to a position before movement.

In some embodiments, the moving part may comprise a moving base part supported by the lower base member and coupled to the lower base member; and a moving member movable on the moving base part.

In some embodiments, the sensor part may comprise an upper sensor holding part holding the upper sensor; a lower sensor holding part holding the lower sensor; and a sensor holding part coupling member coupled to the upper sensor holding part and the lower sensor holding part, wherein the sensor holding part coupling member may be coupled to the moving member.

In some embodiments, the moving part may further comprise a fine adjustment part capable of changing a position of one of the upper sensor and the lower sensor on a plane so that the upper sensor and the lower sensor correspond to each other.

In some embodiments, the sensor part may comprise an upper sensor holding part holding the upper sensor; a lower sensor holding part holding the lower sensor; and a sensor holding part coupling member coupled to the upper sensor holding part and the lower sensor holding part, wherein the sensor holding part coupling member may be coupled to the moving member and the fine adjustment part.

In some embodiments, the calibration part may comprise a calibration block disposed between the upper sensor and the lower sensor when zero-point calibrating the sensor part; and a calibration block support part supporting the calibration block, wherein an actual thickness of the calibration block may be input.

In some embodiments, the calibration block may be disposed adjacent to and spaced apart from distal ends of the plurality of electrode transfer rollers.

In some embodiments, the zero-point calibration may be matching an actual thickness of the calibration block with a measured thickness of the calibration block measured by the sensor part.

In order to achieve the second technical problem, the present disclosure provides a secondary battery electrode thickness measuring method comprising an electrode thickness measurement step of, when an electrode is transferred by a plurality of electrode transfer rollers using the secondary battery electrode thickness measuring device, the sensor part measuring a thickness of the electrode; and a sensor part calibration step of, when transfer of the electrode by the plurality of electrode transfer rollers is stopped, moving the sensor part to a calibration part to zero-point calibrate the sensor part.

In some embodiments, the method may further comprise a sensor part return step of, after the sensor part calibration step, when transfer of the electrode by the plurality of electrode transfer rollers is resumed, returning the sensor part to a position before movement to measure the thickness of the electrode.

In some embodiments, the method may further comprise, before the electrode thickness measurement step, a fine adjustment step of making the upper sensor and the lower sensor correspond to each other using a fine adjustment part capable of changing a position of one of the upper sensor and the lower sensor on a plane.

### [Advantageous Effects]

A secondary battery electrode thickness measuring device and a secondary battery electrode thickness measuring method using the same according to embodiments of the present disclosure have effects of being usable in a winding process and being capable of zero-point adjustment during the winding process.

The effects that can be obtained in exemplary embodiments of the present disclosure are not limited to the above-described effects, and other effects not mentioned can be clearly understood by a person skilled in the art from the description of the disclosure described below. In other words, unintended effects of implementing the exemplary embodiments of the present disclosure may also be derived from the exemplary embodiments of the present disclosure by a person skilled in the art.

### [Brief Description of the Drawings]

FIG. 1 is a diagram showing a perspective view in one direction of an electrode thickness measuring device according to an embodiment of the present disclosure.
FIG. 2 is a diagram showing a perspective view in another direction of an electrode thickness measuring device according to an embodiment of the present disclosure.
FIG. 3 is a diagram showing a shape of an electrode thickness measuring device viewed from above according to an embodiment of the present disclosure.
FIG. 4 is a diagram showing a shape of an electrode thickness measuring device viewed from a left side according to an embodiment of the present disclosure.
FIG. 5 is a diagram showing a shape of an electrode thickness measuring device viewed from a front side according to an embodiment of the present disclosure.
FIG. 6 is a diagram showing a shape of an electrode thickness measuring device viewed from a right side according to an embodiment of the present disclosure.
FIG. 7 is a diagram showing an electrode thickness measuring method according to exemplary embodiments of the present disclosure.

### [Detailed Description]

Hereinafter, preferred embodiments of the present disclosure concept will be described in detail with reference to the accompanying drawings. However, embodiments of the present disclosure concept may be modified in various different forms, and it should not be interpreted that the scope of the present disclosure concept is limited by the embodiments described below. It is preferred that the embodiments of the present disclosure be interpreted as provided to explain the present disclosure more fully to a person skilled in the art. Herein, the same reference numerals refer to the same elements. In addition, the various elements and areas of the drawings are schematically illustrated. Accordingly, the present disclosure is not limited by the relative sizes or spacing illustrated in the accompanying drawings.

Terms such as first, second, and the like may be used to describe various components, but the components are not limited by the terms. The terms are used only for the purpose of distinguishing one component from the other component. For example, a first component may be named a second component, and vice versa, a second component may be named a first component, without departing from the scope of the present disclosure concept.

The terms used in the present description are used merely to explain specific embodiments and are not intended to limit the present disclosure concept. Expressions in the singular include the plural unless the context clearly indicates otherwise. The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

Unless otherwise defined, all terms used herein, including technical terms and scientific terms, shall have the same meaning as commonly understood by a person skilled in the art of the technical field to which the present disclosure concept belongs. In addition, it will be understood that terms such as commonly used, dictionary-defined terms are to be construed to have a meaning consistent with the meaning they have in the context of the technology to which they relate and are not to be construed in an excessively formal sense unless explicitly defined herein.

Specific process sequences may be performed differently from the order described when some embodiments are otherwise implementable. For example, two processes described in succession may be performed substantially simultaneously or may be performed in an order opposite to the order described.

In the accompanying drawings, for example, variations of the depicted forms may be expected, depending on manufacturing technology and/or tolerances. Accordingly, embodiments of the present disclosure should not be construed as limited to the specific forms of the areas shown herein, and should include, for example, variations in form resulting from manufacturing processes. All terms "and/or" used herein includes each and every combination of one or more of the components mentioned. In addition, the term "substrate" as used herein may refer to the substrate itself, or to a stacked structure including the substrate and any predetermined layers or films, etc. formed on the surface thereof. In addition, the term "surface of the substrate" as used herein may refer to the exposed surface of the substrate itself, or to the outer surface of a predetermined layer or film, etc. formed on the substrate.

### (First Embodiment)

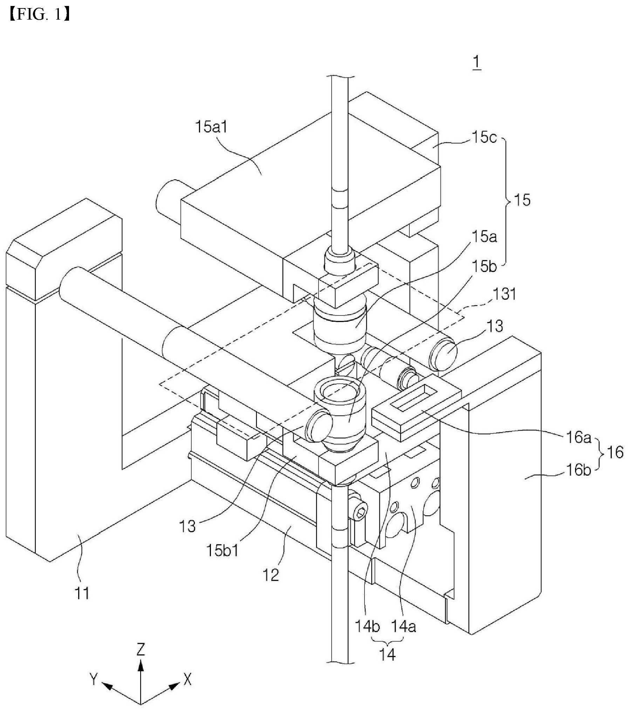

FIG. 1 is a diagram showing a perspective view in one direction of an electrode thickness measuring device 1 according to an embodiment of the present disclosure.

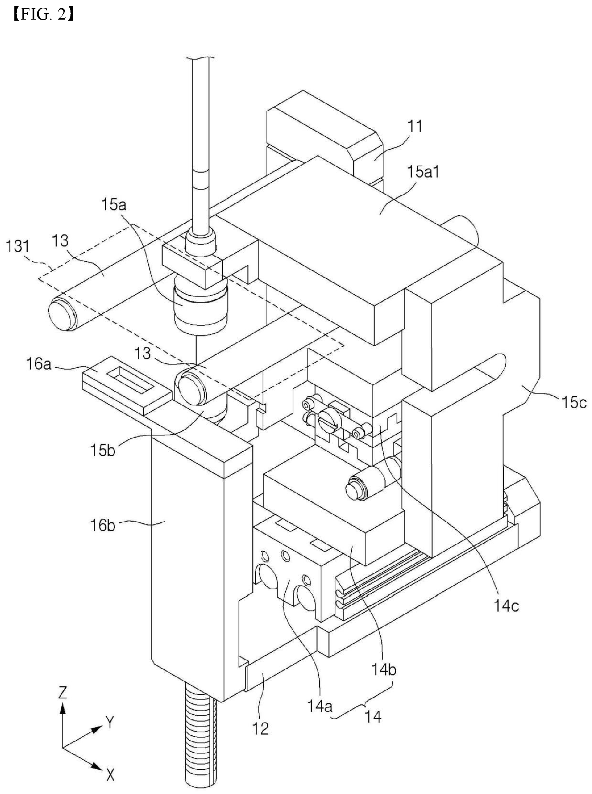

FIG. 2 is a diagram showing a perspective view in another direction of the electrode thickness measuring device 1 according to an embodiment of the present disclosure.

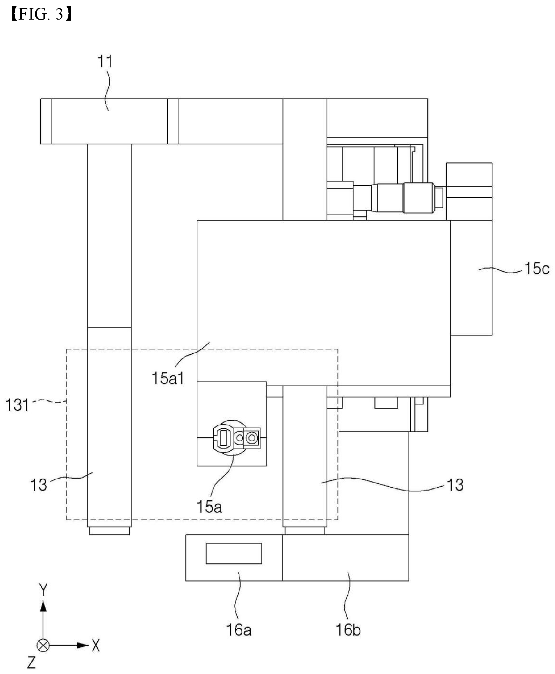

FIG. 3 is a diagram showing a shape of the electrode thickness measuring device 1 viewed from above according to an embodiment of the present disclosure.

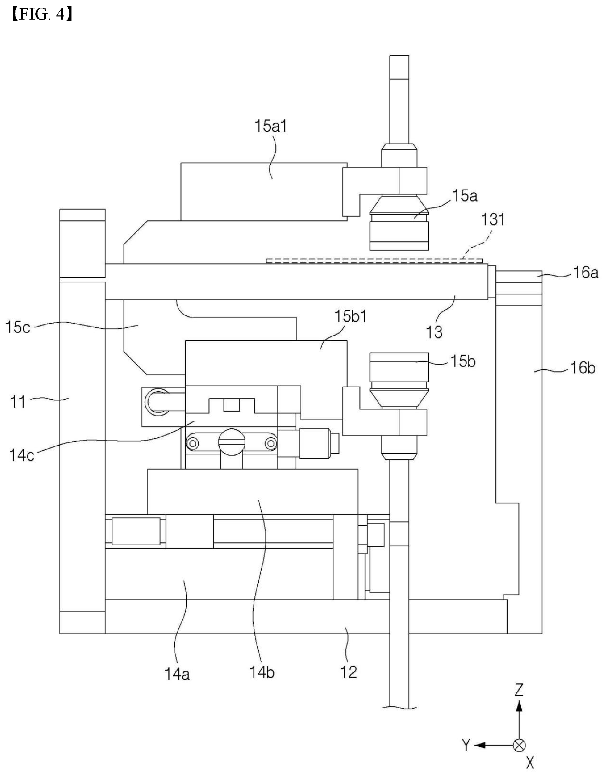

FIG. 4 is a diagram showing a shape of the electrode thickness measuring device 1 viewed from a left side according to an embodiment of the present disclosure.

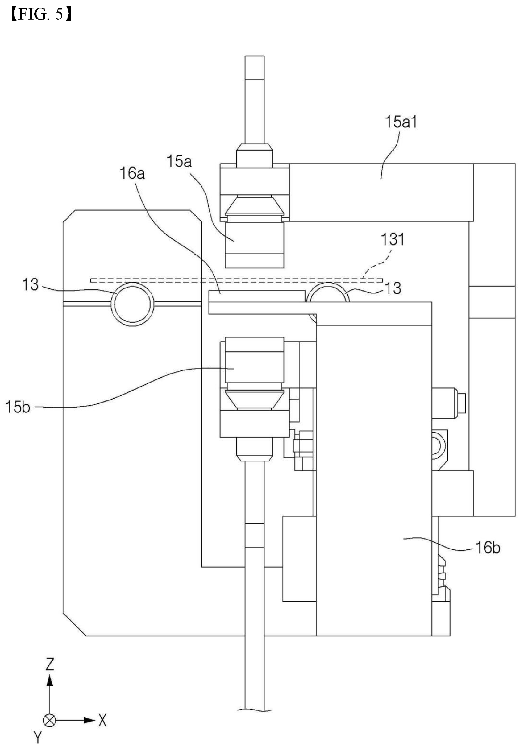

FIG. 5 is a diagram showing a shape of the electrode thickness measuring device 1 viewed from a front side according to an embodiment of the present disclosure.

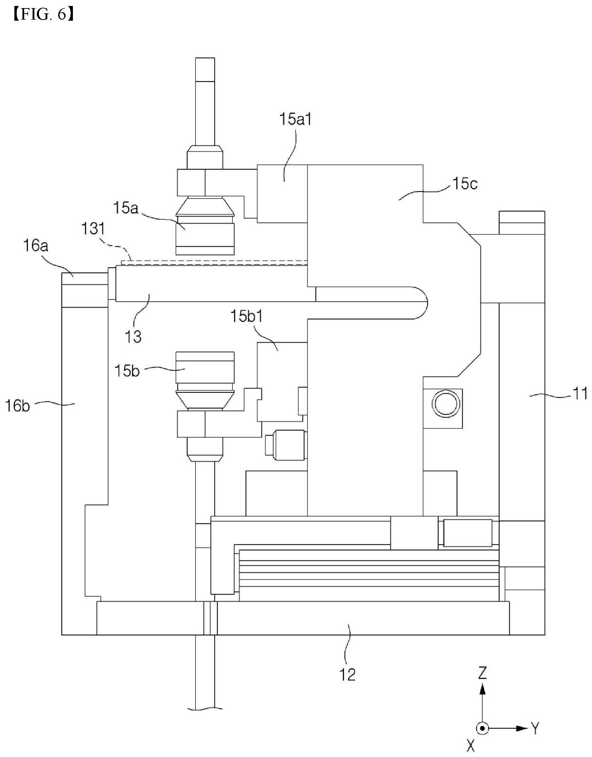

FIG. 6 is a diagram showing a shape of the electrode thickness measuring device 1 viewed from a right side according to an embodiment of the present disclosure.

Referring to FIG. 1 to FIG. 6, the secondary battery electrode thickness measuring device 1 according to an embodiment of the present disclosure may comprise a side base member 11, a lower base member 12, a plurality of electrode transfer rollers 13, a sensor part 15, a moving part 14, and a calibration part 16.

The side base member 11 may support other components connected to the side base member 11.

The lower base member 12 may be coupled to the side base member 11.

The plurality of electrode transfer rollers 13 may be supported by the side base member 11, support an electrode 131, and transfer the electrode 131 in one direction.

The electrode comprises an electrode current collector and an active material coated on the electrode current collector, and a thickness of the electrode may not be constant as the electrode is formed through various processes.

Accordingly, the sensor part 15 may measure a thickness of an electrode positioned in a space between two electrode transfer rollers 13 among the plurality of electrode transfer rollers 13.

The moving part 14 may move the sensor part 15.

In some embodiments, the moving part 14 may move the sensor part 15 out of the space between the two electrode transfer rollers 13 to the calibration part 16.

In some embodiments, the moving part 14 may move the sensor part 15 in a +Y direction or a -Y direction.

In some embodiments, the moving part 14 may move the sensor part 15 in the -Y direction to move the sensor part 15 to the calibration part 16.

The space between the two electrode transfer rollers 13 may be a three-dimensional space formed by a rectangular plane formed by both axes of the two electrode transfer rollers 13 and distal end lines connecting distal ends of the two electrode transfer rollers 13, and an axis perpendicular to the rectangular plane.

The calibration part 16 may zero-point calibrate the sensor part 15.

The calibration part 16 may increase accuracy of a thickness measured by the secondary battery electrode thickness measuring device 1 by zero-point calibrating the sensor part 15.

In some embodiments, the sensor part 15 may comprise an upper sensor 15a measuring an upper portion of the electrode; and a lower sensor 15b disposed at a position corresponding to the upper sensor 15a and measuring a lower portion of the electrode.

The upper sensor 15a and the lower sensor 15b may be arranged in a line in a direction perpendicular to a plane (for example, an XY plane) in which both axes of the two electrode transfer rollers 13 serve as both sides of the plane.

An axis of the upper sensor 15a and the lower sensor 15b arranged in the line may be positioned on a straight line (for example, a Z axis).

The electrode may be disposed between the upper sensor 15a and the lower sensor 15b, and the thickness of the electrode may be measured by the sensor part 15.

In some embodiments, when transfer of the electrode by the plurality of electrode transfer rollers 13 is stopped, the moving part 14 may move the sensor part 15 to the calibration part 16.

In some embodiments, the moving part 14 may move the sensor part 15 in the -Y direction to move the sensor part 15 to the calibration part 16.

In some embodiments, the calibration part 16 may be positioned in a three-dimensional space formed by a plane in which extension lines of both axes of the two electrode transfer rollers 13 serve as both sides of the plane and an axis perpendicular to the plane, outside the space between the two electrode transfer rollers 13.

In some embodiments, the calibration part 16 may be positioned at one point in a direction perpendicular to a transfer direction of the electrode.

In some embodiments, the sensor part 15 may be moved to the calibration part 16 and zero-adjusted by the calibration part 16.

In some embodiments, when transfer of the electrode by the plurality of electrode transfer rollers 13 is resumed, the moving part 14 may return the moved sensor part 15 to a position before movement.

In some embodiments, the moving part 14 may move the sensor part 15 in the +Y direction to return the sensor part 15 to the position before movement.

In some embodiments, the moving part 14 may comprise a moving base part 14a supported by the lower base member 12 and coupled to the lower base member 12; and a moving member 14b movable on the moving base part 14a.

In some embodiments, the moving base part 14a may comprise a rail provided in a direction of the calibration part 16, and the moving member 14b may be mounted on the rail so that the moving member 14b can move towards the direction of the calibration part 16.

In some embodiments, the moving member 14b may be driven by an external power source.

In some embodiments, the sensor part 15 may comprise an upper sensor holding part 15a1 holding the upper sensor 15a; a lower sensor holding part 15b1 holding the lower sensor 15b; and a sensor holding part coupling member 15c coupled to the upper sensor holding part 15a1 and the lower sensor holding part 15b1, wherein the sensor holding part coupling member 15c may be coupled to the moving member 14b.

In some embodiments, the upper sensor holding part 15a1 may hold the upper sensor 15a in a direction perpendicular to an axial direction of the upper sensor 15a.

The upper sensor holding part 15a1 may increase space compactness by holding the upper sensor 15a in the direction perpendicular to the axial direction of the upper sensor 15a.

In some embodiments, the lower sensor holding part 15b1 may hold the lower sensor 15b in a direction perpendicular to an axial direction of the lower sensor 15b.

The lower sensor holding part 15b1 may increase space compactness by holding the lower sensor 15b in the direction perpendicular to the axial direction of the lower sensor 15b.

The sensor holding part coupling member 15c may be coupled to the moving member 14b so that the upper sensor holding part 15a1 and the lower sensor holding part 15b1 can move integrally.

In some embodiments, the moving part 14 may further comprise a fine adjustment part 14c capable of changing a position of one of the upper sensor 15a and the lower sensor 15b on a plane so that the upper sensor 15a and the lower sensor 15b correspond to each other.

In some embodiments, the fine adjustment part 14c may be disposed on an upper surface of the moving member 14b and move integrally with the moving member 14b.

Axes of the upper sensor 15a and the lower sensor 15b may be calibrated to coincide with each other through the fine adjustment part 14c.

In some embodiments, the sensor part 15 may comprise an upper sensor holding part 15a1 holding the upper sensor 15a; a lower sensor holding part 15b1 holding the lower sensor 15b; and a sensor holding part coupling member 15c coupled to the upper sensor holding part 15a1 and the lower sensor holding part 15b1, wherein the sensor holding part coupling member 15c may be coupled to the moving member 14b and the fine adjustment part 14c.

The sensor holding part coupling member 15c may be coupled to the moving member 14b so that the upper sensor holding part 15a1 and the lower sensor holding part 15b1 can move integrally, and may be coupled to the fine adjustment part 14c so that a position of the sensor part 15 can be finely adjusted.

In some embodiments, the calibration part 16 may comprise a calibration block 16a disposed between the upper sensor 15a and the lower sensor 15b when zero-point calibrating the sensor part 15; and a calibration block support part 16b supporting the calibration block 16a, wherein an actual thickness of the calibration block 16a may be input to a calibration control unit (not shown) controlling the calibration part.

An actual thickness of the calibration block 16a may be input and compared with a measured thickness of the calibration block 16a measured by the sensor part 15 to enable zero-point adjustment.

In some embodiments, the calibration block 16a may be disposed adjacent to and spaced apart from distal ends of the plurality of electrode transfer rollers 13.

In some embodiments, the calibration block support part 16b may support the calibration block 16a so that the calibration block 16a may be disposed adjacent to and spaced apart from the distal ends of the plurality of electrode transfer rollers 13.

In some embodiments, the calibration block 16a may be disposed adjacent to and spaced apart from distal ends of two electrode transfer rollers 13 among the plurality of electrode transfer rollers 13 that form a space in which the sensor part 15 measures a thickness of the electrode.

In some embodiments, an axial direction of the plurality of electrode transfer rollers 13 may be perpendicular to a transfer direction of the electrode.

In some embodiments, the calibration block 16a may be positioned in a direction perpendicular to the transfer direction of the electrode, adjacent to and spaced apart from the distal ends of the plurality of electrode transfer rollers 13.

In some embodiments, when zero-point calibrating the sensor part 15, the calibration block 16a may be disposed between the upper sensor 15a and the lower sensor 15b.

In some embodiments, the zero-point calibration may be matching an actual thickness of the calibration block 16a with a measured thickness of the calibration block 16a measured by the sensor part 15.

### (Second Embodiment)

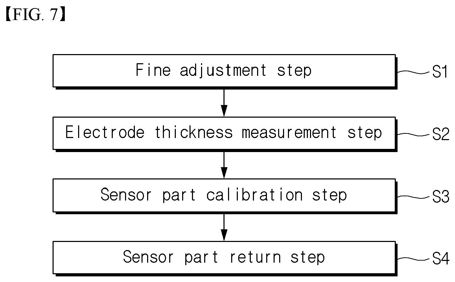

FIG. 7 is a diagram showing an electrode thickness measuring method according to exemplary embodiments of the present disclosure.

Referring to FIG. 7, a secondary battery electrode thickness measuring method according to an embodiment of the present disclosure may comprise an electrode thickness measurement step S2 and a sensor part calibration step S3.

In the electrode thickness measurement step S2, when an electrode is transferred by a plurality of electrode transfer rollers 13 using the secondary battery electrode thickness measuring device 1, a sensor part 15 may measure a thickness of the electrode.

In the sensor part calibration step S3, when transfer of the electrode by the plurality of electrode transfer rollers 13 is stopped, the sensor part 15 may be moved to a calibration part 16 to zero-point calibrate the sensor part 15.

In some embodiments, the method may further comprise a sensor part return step S4 of, after the sensor part calibration step S3, when transfer of the electrode by the plurality of electrode transfer rollers 13 is resumed, returning the sensor part 15 to a position before movement to measure the thickness of the electrode.

In some embodiments, the method may further comprise, before the electrode thickness measurement step S2, a fine adjustment step S1 of making the upper sensor 15a and the lower sensor 15b correspond to each other using a fine adjustment part 14c capable of changing a position of one of the upper sensor 15a and the lower sensor 15b on a plane.

As described above, although the embodiments of the present disclosure have been described in detail, those skilled in the art to which the present disclosure belongs will be able to implement the present disclosure with various modifications without departing from the spirit and scope of the present disclosure as defined in the appended claims. Therefore, it should be understood that various equivalents and modifications that can substitute for the embodiments may exist at the time of filing the present application.

### [Description of Reference Numerals]

1: electrode thickness measuring device
11: side base member
12: lower base member
13: electrode transfer roller
131: electrode
14: moving part
14a: moving base part
14b: moving member
14c: fine adjustment part
15: sensor part
15a: upper sensor
15a1: upper sensor holding part
15b: lower sensor
15b1: lower sensor holding part
15c: sensor holding part coupling member
16: calibration part
16a: calibration block
16b: calibration block support part
S1: fine adjustment step
S2: electrode thickness measurement step
S3: sensor part calibration step
S4: sensor part return step

## Claims

1. A secondary battery electrode thickness measuring device comprising:
a fixed side base member;
a lower base member coupled to the side base member;
a plurality of electrode transfer rollers supported by the side base member, supporting an electrode, and transferring the electrode in one direction;
a sensor part measuring a thickness of an electrode positioned in a space between two electrode transfer rollers among the plurality of electrode transfer rollers;
a moving part capable of moving the sensor part; and
a calibration part zero-point calibrating the sensor part.

2. The secondary battery electrode thickness measuring device of claim 1, wherein the sensor part comprises:
an upper sensor measuring an upper portion of the electrode; and
a lower sensor disposed at a position corresponding to the upper sensor and measuring a lower portion of the electrode.

3. The secondary battery electrode thickness measuring device of claim 1, wherein the moving part moves the sensor part to the calibration part when transfer of the electrode by the plurality of electrode transfer rollers is stopped.

4. The secondary battery electrode thickness measuring device of claim 3, wherein the moving part returns the moved sensor part to a position before movement when transfer of the electrode by the plurality of electrode transfer rollers is resumed.

5. The secondary battery electrode thickness measuring device of claim 1, wherein the moving part comprises:
a moving base part supported by the lower base member and coupled to the lower base member; and
a moving member movable on the moving base part.

6. The secondary battery electrode thickness measuring device of claim 5, wherein the sensor part comprises:
an upper sensor holding part holding the upper sensor;
a lower sensor holding part holding the lower sensor; and
a sensor holding part coupling member coupled to the upper sensor holding part and the lower sensor holding part,
wherein the sensor holding part coupling member is coupled to the moving member.

7. The secondary battery electrode thickness measuring device of claim 5, wherein the moving part further comprises a fine adjustment part capable of changing a position of one of the upper sensor and the lower sensor on a plane so that the upper sensor and the lower sensor correspond to each other.

8. The secondary battery electrode thickness measuring device of claim 7, wherein the sensor part comprises:
an upper sensor holding part holding the upper sensor;
a lower sensor holding part holding the lower sensor; and
a sensor holding part coupling member coupled to the upper sensor holding part and the lower sensor holding part,
wherein the sensor holding part coupling member is coupled to the moving member and the fine adjustment part.

9. The secondary battery electrode thickness measuring device of claim 1, wherein the calibration part comprises:
a calibration block disposed between the upper sensor and the lower sensor when zero-point calibrating the sensor part; and
a calibration block support part supporting the calibration block,
wherein an actual thickness of the calibration block is input.

10. The secondary battery electrode thickness measuring device of claim 9, wherein the calibration block is disposed adjacent to and spaced apart from distal ends of the plurality of electrode transfer rollers.

11. The secondary battery electrode thickness measuring device of claim 9, wherein the zero-point calibration comprises matching an actual thickness of the calibration block with a measured thickness of the calibration block measured by the sensor part.

12. A secondary battery electrode thickness measuring method comprising:
an electrode thickness measurement step of measuring, by a sensor part, a thickness of an electrode when the electrode is transferred by a plurality of electrode transfer rollers using the secondary battery electrode thickness measuring device of claim 1; and
a sensor part calibration step of moving the sensor part to a calibration part to zero-point calibrate the sensor part, when transfer of the electrode by the plurality of electrode transfer rollers is stopped.

13. The secondary battery electrode thickness measuring method of claim 12, further comprising a sensor part return step of, after the sensor part calibration step, when transfer of the electrode by the plurality of electrode transfer rollers is resumed, returning the sensor part to a position before movement to measure the thickness of the electrode.

14. The secondary battery electrode thickness measuring method of claim 12, further comprises, before the electrode thickness measurement step, a fine adjustment step of making the upper sensor and the lower sensor correspond to each other using a fine adjustment part capable of changing a position of one of the upper sensor and the lower sensor on a plane.
